**Europäisches Patentamt**

**European Patent Office**

**Office européen des brevets**

(19)

(11) Veröffentlichungsnummer: **0 000 401**
**B1**

(12) **EUROPÄISCHE PATENTSCHRIFT**

(21) Anmeldenummer: **78100405.6**

(22) Anmeldetag: **14.07.78**

(51) Int. Cl.³: **F 24 D 9/02  F 24 D 3/00
F 24 D 3/04**

(54) Vorrichtung zum Übertragen von Heizwärme von einer Wärmequelle auf Verbraucherkreise

(30) Priorität: **19.07.77 DE 2732639**

(43) Veröffentlichungstag der Anmeldung:
**24.01.79 Patentblatt 79/02**

(45) Bekanntmachung des Hinweises auf die Patenterteilung:
**20.08.80 Patentblatt 80/17**

(84) Benannte Vertragsstaaten:
**BE CH FR GB NL SE**

(56) Entgegenhaltungen:
**DE - C - 13 525
DE - C - 47 258
FR - A - 750 486
FR - A - 2 276 539**

(73) Patentinhaber: **Majoros, Istvan
Widenstrasse 25
CH - 6317 Oberwil (CH)**

(72) Erfinder: **siehe Anmelder**

(74) Vertreter: **Patentanwälte Dipl.-Ing. A. Grünecker,
Dr.-Ing. H. Kinkeldey, Dr.-Ing. W. Stockmair,
Dr. rer. nat. K. Schumann, Dipl.-Ing. P. Jakob,
Dr. rer. nat. G. Bezold
Maximilianstrasse 43
D - 8000 München 22 (DE)**

Courier Press, Leamington Spa, England.

Vorrichtung zum Übertragen von Heizwärme von einer Wärmequelle auf Verbraucherkreise

Die Erfindung bezieht sich auf eine Vorrichtung zum Übertragen von Heizwärme von einem eine Wärmequelle aufweisenden Primärkreis auf jeweils mit einem Reglerventil versehene und Verbraucher durchströmende Sekundärkreise über im Primärkreis in Serie geschaltete Wärmeaustauscher.

Eine Vorrichtung dieser Art ist beispielsweise durch die FR-A 2 276 539 bekannt geworden. Bei einer solchen Vorrichtung besteht der Primärkreis aus einem Einrohrsystem, durch das mittels sekundärer Leitungskreise Wärmeverbraucher über Wärmeaustauscher beaufschlagt werden.

Die Wärmeaustauscher sind ohne zusätzliche Drosselung und Regelung in Serie geschaltet. Herrscht beispielsweise im Primärkreis die Temperatur von 220°C, so ist bei niederem Wärmeverbrauch diese Temperatur etwa auch in den Sekundärkreisen vorhanden. Eine derart hohe Temperatur entspricht aber einem Druck von etwa 23 bis 24 ata, der jedoch in Sekundärkreisen nicht erwünscht ist. Der Primärkreis und die Sekundärkreise sind mithin thermisch nicht getrennt.

Durch die Erfindung soll demgegenüber die Aufgabe gelöst werden, die bekannte Vorrichtung zum Übertragen von Heizwärme von einem eine Wärmequelle aufweisenden Primärkreis auf Verbraucher durchströmende Sekundärkreise mit den weiteren Merkmalen der eingangs erläuterten Gattung so weiterzubilden, daß zur wirtschaftlichen Regelung des Arbeitsmediums nicht nur eine hydraulische, sondern auch eine thermische Trennung von Primär- und Sekundärkreis ermöglicht wird.

Diese Aufgabe wird dadurch gelöst, daß zwischen dem Primärkreis und jedem Sekundärkreis ein die Wärme mittels Dampf übertragender Übergabekreis vorgesehen ist, der primärseitig an die Wärmeaustauscher des Primärkreises und sekundärseitig an einen weiteren Wärmeaustauscher angeschlossen und mit einem konstanten, von einem Wärmezähler und Temperaturregler gesteuerten Übertragungsmedium teilweise gefüllt und durch ein Sicherheitsventil überwacht ist.

Durch die erfindungsgemäße Anordnung eines in sich vollständig geschlossenen und teilweise mit dem gewählten Medium gefüllten Übergabekreises zwischen dem Primärkreis und den Sekundärkreisen kann die Temperatur in diesen Kreisen beispielsweise von 20° bis annähernd auf die Primärkreistemperatur (z.B. 500°C) gleitend geregelt werden. Auch wenn das Übertragungsmedium ein Kühlmittel ist, kann die Regulierung im Minimumtemperaturbereich erfolgen. Der Übergabekreis ist evakuiert und weist eine konstante Menge Wasser oder Übertragungsmedium auf.

Die konstante Wassermenge bzw. das Übertragungsmedium im Übergabekreis ist dabei volumenmäßig so bemessen, daß dieses Volumen die im Sekundärkreis erforderliche maximale Wärmeleistung vom Wärmeaustauscher des Primärkreises auf den jeweiligen Wärmeaustauscher des Sekundärkreises übertragen kann, wobei die Übertragung in Dampfform erfolgt. Dadurch ist es möglich, die erforderliche Wärme ohne Differenzdruck mit kleiner Wassermenge und kleiner Wassergeschwindigkeit zu übertragen. Der Wärmezähler, Temperaturregler und das Sicherheitsventil können entsprechend den im Übergabekreis auftretenden Druck- und Temperaturverhältnissen gewählt werden, wobei ihre Belastung entsprechend minimal ist. Insbesondere erfordert der Übergabekreis keine zusätzliche Energie und die Störanfälligkeit ist nur gering. Auch gibt es keine von Antrieben und Ventilen verursachten Geräusche, so daß die gemäß der Erfindung vorgesehene Wärmeübertragung außerordentlich wirtschaftlich ist.

Im einzelnen wird die Ausführung so durchgeführt, daß als Wärmequelle der Wärmezuführstrang des Fernheiznetzes vorgesehen ist, durch den die in Serie geschalteten Wärmeaustauscher der Primärkreise ungeregelt mit hochgespannter Fernwärme beaufschlagt werden.

Die den Wärmeaustauscher der Primärkreise hintereinander zugeführte Wärmemenge wird nicht geregelt und darf beliebig schwanken. Der Strömungswiderstand ist konstant und ist praktisch identisch mit dem Strömungswiderstand im Wärmezuführungsstrang des Fernheiznetzes, der vom letzten Wärmeaustauscher des Primärkreises wieder zum Fernheizwerk zurückgeführt wird.

Hierbei ist jeder primärseitige Wärmeaustauscher abschaltbar ausgebildet und durch eine absperrbare Umgehungsleitung überbrückt. Jeder primärkreisseitige Wärmeaustauscher kann daher ohne Unterbrechung der Wärmezufuhr zu den anderen in Serie geschalteten primärkreisseitigen Wärmeaustauschern im Bedarfsfalle ohne weiteres ausgewechselt werden.

Des weiteren ist vorgesehen, daß jeder sekundärkreisseitige Wärmeaustauscher des Übergabekreises als Kondensator ausgebildet ist, in dessen Rohrstrang für den Kondensatablauf in Strömungsrichtung gesehen der Wärmezähler, das Sicherheitsventil und der Temperaturregler eingebaut sind.

Die Wärme wird mithin aus dem Primärkreis von dem primärkreisseitigen Verdampfer aufgenommen und als Dampf über den Übergabekreis auf den Wärmeaustauscher des Sekundärkreises übertragen. Der Verdampfer des primärkreisseitigen Wärmeaustauschers entnimmt dabei nach Bedarf bzw. in Abhängigkeit von der Temperatur des Kondensates im Übergabekreis die Wärme aus dem Wärmezuführstrang des Fernheiznetzes und verursacht dadurch einen Temperaturabfall.

Sowohl im primärkreisseitigen als auch im sekundärkreisseitigen Wärmeaustauscher ist eine Rohrschlange vorgesehen, die beide im Übergabekreis in Serie angeordnet sind, wobei die Rohrschlange im primärkreisseitigen Wärmeaustauscher von der Fernwärme beaufschlagt ist.

Je nach Temperaturabfall des Kondensats läßt der Temperaturregler im Übergabekreis als das in Strömungsrichtung des Kondensats gesehen letzte Instrument mehr oder weniger Kondensat in den primärkreisseitigen Wärmeaustauscher strömen, in welchem es verdampft und als Dampf in die Rohrschlange des als Kondensator ausgebildeten sekundärkreisseitigen Wärmeaustauschers gelangt, worauf der Kreislauf von neuem beginnt.

In vorteilhafter Weise ist vorgesehen, daß jeder primärkreisseitige und der sekundärkreisseitige Wärmeaustauscher einschließlich dem Wärmezähler, Sicherheitsventil und Temperaturregler jedes Übergabekreises zu einem Aggregat zusammengeschlossen sind, in welchem der sekundärkreisseitige Wärmeaustauscher bzw. Kondensator oberhalb des primärkreisseitigen Wärmeaustauschers angeordnet ist.

Durch diese Maßnahmen kann beispielsweise in einer mit Fernwärme zu versorgenden Haus- oder Wohneinheit an geeigneter Stelle ein derartiges, lediglich vier Anschlüsse aufweisendes und entsprechend bemessenes Aggregat aufgestellt werden. Dieses wird mit zwei dafür vorgesehenen Anschlüssen in den Wärmezuführungsstrang für die Fernwärme eingebaut und mittels der beiden anderen Anschlüsse an den eigentlichen, z.B. die Heizkörper aufweisenden Verbraucherkreis angeschlossen. Solche Aggregate können gegebenenfalls nach Leistung gestuft in Serie gefertigt werden, so daß eine außerordentlich wirtschaftliche Vorrichtung zum Übertragen von Fernwärme auf Verbraucherkreise gewährleistet ist.

Der Erfindung soll nachfolgend anhand von schematischen Darstellungen näher erläutert werden. In der Zeichnung zeigt:

Fig. 1 einen Strangriß mit mehreren in einem Fernheiznetz eingebauten und teilweise an Verbraucherkreise angeschlossenen Vorrichtungen zum Übertragen der Fernwärme,

Fig. 2 einen Längsschnitt durch einen Wärmezähler,

Fig. 3 einen Längsschnitt durch ein Sicherheitsventil,

Fig. 4 einen Längsschnitt durch einen Temperaturregler.

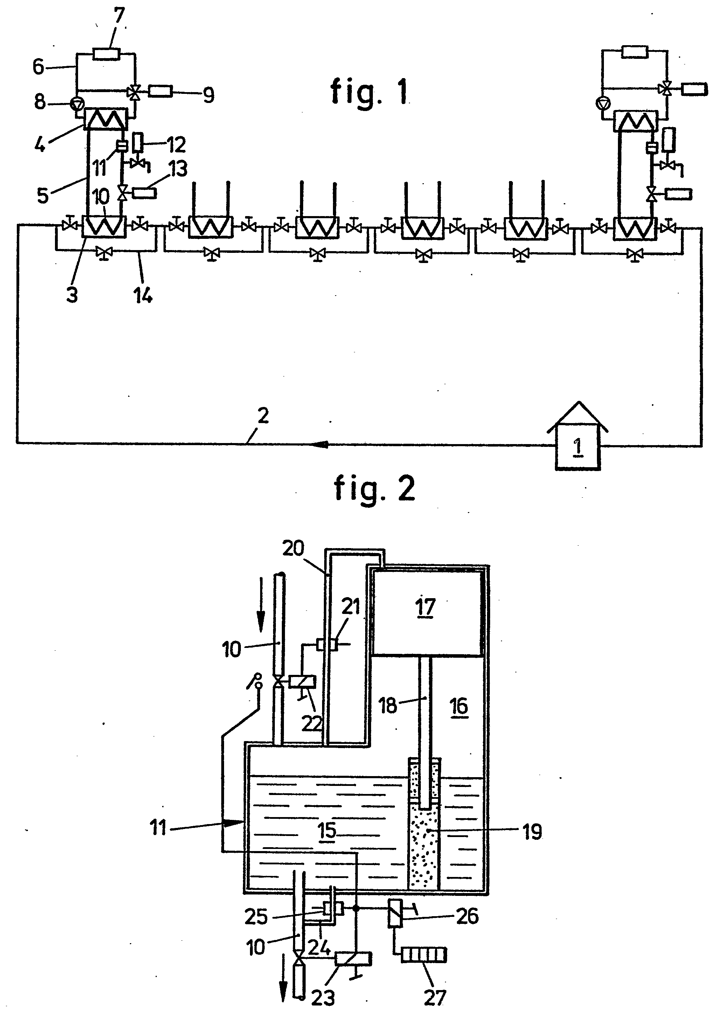

Gemäß Fig. 1 wird beispielsweise von einem Fernheizwerk 1 als Wärmequelle ein in üblicher Weise isolierter und unter der Erdoberfläche verlegter Rohrstrang 2 zum Transport von hochgespannter Fernwärme, z.B. in Form von hochüberhitztem Wasser, vorzugsweise durch Straßen geführt, in denen sich mit Fernwärme zu versorgende Haus- bzw. Wohneinheiten befinden, wobei die betreffenden Haus- bzw. Wohneinheiten in Serie hintereinander an den Rohrstrang 2 angeschlossen werden. Von der letzten versorgten Haus- bzw. Wohneinheit wird der Wärmezuführungsstrang 2 wieder in das Fernheizwerk 1 zurückgeführt, so daß der gesamte geschlossene Rohrstrang 2 zugleich einen Primärkreise bildet. In Siedlungen, in denen praktisch jede Haus- bzw. Wohneinheit mit Fernwärme versorgt werden soll, wird der Wärmezuführstrang 2 in einfacher und vorteilhafter Weise z.B. unmittelbar durch die Keller der Häuserreihen hindurch verlegt, wodurch die Investitionskosten erheblich gesenkt werden können.

Für die Verwendung der hochgespannten Wärme in Wohngebäuden müssen Druck und Temperatur erheblich herabgesetzt werden. Erfindungsgemäß wird daher eine Vorrichtung geschaffen, mit welcher die Fernwärme in wirtschaftlicher Weise mit zulässigem Druck und zulässiger Temperatur auf die Verbraucherkreise übertragbar ist. Hierzu wird jeder Haus- bzw. Wohneinheit ein mit der Fernwärme beaufschlagter Wärmeaustauscher 3 zugeordnet, der mit seinem Hochdruckteil im Primärkreis des die Fernwärme zuführenden Rohrstranges 2 liegt. Der Niederdruckteil des Wärmeaustauschers 3 wird beispielsweise von einer Rohrschlange gebildet, deren Enden mit den Enden einer zweiten Rohrschlange verbunden sind, die einen Teil eines als Kondensator ausgebildeten weiteren Wärmeaustauschers 4 bildet, der in einem vorbestimmten Abstand oberhalb des im Primärkreis 2 angeordneten Wärmeaustauschers 3 vorgesehen ist. Die Rohrschlangen der beiden Wärmeaustauscher 3 und 4 und die diese miteinander verbindenden Rohrleitungen bilden den Übergabekreis 5 für die Wärme an die Verbraucher, wogegen der das Heizmedium für die Verbraucher enthaltende andere Teil des als Kondensator ausgebildeten Wärmeaustauschers 4 in einem die Verbraucher z.B. Heizkörper, Boiler und dgl. mit der Wärme des Heizmediums beaufschlagenden Sekundärkreis 6 vorgesehen ist. Außer den Verbrauchern 7 sind in üblicher Weise im Sekundärkreis 6 noch eine Umwälzpumpe 8 und ein Reglerventil 9 angeordnet.

Wie aus Fig. 1 hervorgeht, ist für jede Haus- bzw. Wohneinheit ein Wärmeaustauscher 3 mit dem bereits erläuterten Zubehör vorgesehen, wobei, wie bereits erwähnt, die Wärmeaustauscher 3 sämtlicher mit Wärme zu versorgender Haus- bzw. Wohneinheiten in Serie geschaltet sind und zwar so, daß sie sämtlich ungeregelt mit hochgespannter Fernwärme beaufschlagt werden. Um die zugeführte ungeregelte und hochgespannte Fernwärme geregelt in dem erforderlichen Maße jeweils auf den die Verbraucher enthaltenden Sekundärkreis übertragen zu können, ist in jedem Übergabekreis 5 und zwar in dem Rohrstrang 10, durch den das Kondensat aus dem als Kondensator ausgebildeten Wärmeaustauscher 4 in die als Verdampfer wirkende Rohrschlange des im Primärkreis befindlichen Wärmeaustauschers 3 zurückgeleitet wird, in Strömungsrichtung des Kondensates gesehen ein Wärmezähler 11, ein Sicherheitsventil 12 und ein Temperaturregler 13 angeordnet.

Der Übergabekreis 5 wird mit konstanter Wassermenge betrieben, die so bestimmt wird, daß die Wassermenge die im sekundären Verbraucherkreis erforderliche maximale Wärme, z.B. bei einer Vorlauftemperatur von 90° und einer Rücklauftemperatur von 50°C, übertragen kann. Diese Wassermenge befindet sich bei geschlossenem Reglerventil 9 des Sekundärkreises in dem für das Kondensat vorgesehenen lotrecht verlaufenden Rohrstrang 10 des Übergabekreises 5 zwischen dem Auslaufende der Rohrschlange des Wärmeaustauschers 4 und dem Temperaturregler 13. Da beim Öffnen des Reglerventils 9 die vorgeschriebene Rücklauftemperatur im Übergabekreis unterschritten ist, öffnet der Temperaturregler 13 das die Kondensatleitung abschließende Ventil und läßt so viel Kondensat in die als Verdampfer wirkende Rohrschlange des im Primärkreis befindlichen Wärmeaustauschers 3 einströmen, bis das im Kondensator bzw. Wärmeaustauscher 4 gebildete Kondensat im Temperaturregler 13 wieder die vorgeschriebene Temperatur erreicht hat. Beim Überschreiten dieser Temperatur wird der das Kondensat zum Wärmeaustauscher 3 bzw. Verdampfer zurückführende Rohrstrang 10 durch das vom Temperaturregler thermisch beeinflußte Ventil wieder abgesperrt. Die Übertragung der in einem Sekundärkreis erforderlichen Wärme erfolgt im Übergabekreis mithin durch Dampf, dessen Druck hierbei von der Kondensationstemperatur abhängig ist und zur Temperaturregelung benützt wird. Durch den Wärmezähler werden hierbei die Anzahl der Durchgänge der konstanten jedesmal eine bestimmte Wärmenge transportierenden und an den Sekundärkreis abgebenden Wassermenge summiert und in einem Anzeigegerät die übertragenen Kalorien angezeigt.

Damit im Bedarfsfalle ein Wärmeaustauscher 3 im Primärkreis 2 erneuert oder repariert werden kann, ist jeder ganz oder teilweise von der Fernwärme durchströmte Wärmeaustauscher abschaltbar ausgebildet und durch eine absperrbare Umgehungsleitung 14 überbrückt.

Die Vorrichtung zum Übertragen von Heizwärme vom Fernheiznetz auf Verbraucherkreise wird insbesondere dadurch in wirtschaftlicher und handlicher Weise verwendbar, daß der primärkreisseitige und der sekundärkreisseitige Wärmeaustauscher 3 und 4 einschließlich dem Wärmezähler 11, Sicherheitsventil 12 und Temperaturregler 13 zu einem an einer beliebigen Stelle aufstellbaren Aggregat zusammengeschlossen werden, in welchem aus den dargelegten Gründen der sekundärkreisseitige Wärmeaustauscher 4 bzw. Kondensator mit vorbestimmten Abstand oberhalb des primärkreisseitigen Wärmeaustauschers 3 angeordnet ist.

Bei dem im Übergabekreis 5 vorgesehenen Wärmezähler gemäß Fig. 2 wird das vom Kondensator 4 zum Verdampfer 3 strömende Kondensatvolumen gemessen und mit der Kondensationstemperatur kompensiert. Der Wärmezähler 11 wird von einem Behälter 15 gebildet und soll z.B. eine Meßgröße von 2000 Kcal haben. Als Kondensationstemperatur werden Werte zwischen 50°C und 110°C angenommen, denen ein Druck von 0,125 und 1,46 ata entspricht. Die Kondensationswärme von 2000 Kcal entsprechen 3557,47 cm³ Wasser bei 50°C. Diesem Volumen entspricht der Inhalt des Behälters 15. Die Volumendifferenz zwischen 50°C und 110°C beträgt 392,55 cm³. Für diese Volumendifferenz ist ein sich vom Behälter 15 nach oben erstreckender Zusatzraum 16 vorgesehen, der die Volumendifferenz aufnimmt und noch um die Größe eines Verdrängerkolbens 17 vergrößert ist, dessen Kolbenstange 18 mit ihrem freien Ende in einem mit Ausdehnungsflüssigkeit gefüllten und auf dem Boden des Behälters 15 aufrechtstehenden Zylinder 19 verschiebbar geführt ist.

Des weiteren weist die Oberseite des Behälters 15 noch ein von oben in den Zusatzraum 16 einmündendes Meßrohr 20 auf, auf dem höchstens in Höhe des höchsten Kondensatorspiegels ein mit einem Ausdehnungselement zusammenwirkender induktiver Füllgeber 21 angeordnet ist. Diesem Füllgeber 21 ist ein Magnetventil 22 im Rohrstrang 10 für das Kondensat zugeordnet. Letzteres wirkt mit einem zweiten Magnetventil 23 zusammen, welches in den über dem Behälterboden mündenden Rohrstrang 10 für das Kondensat angeordnet ist. Sobald der Kondensatspiegel den mit einem Ausdehnungselement zusammenwirkenden induktiven Füllgeber 21 erreicht hat, schließt das Magnetventil 22 den oben in den Behälter 15 einmündenden Rohrstrang 10 ab, und das Magnetventil 23 im unten aus dem Behälter 15 austretenden Rohrstrang 10 wird geöffnet, worauf der Behälter 15 mit dem Zusatzraum 16 so weit entleert wird, bis der Kondensatspiegel die Mündung des unten in den Behälter 15 hineinragenden Rohrstranges 10 erreicht hat. Die weitere Entleerung erfolgt verlangsamt durch ein im Behälterboden angeordnetes und mit dessen Innenseite bündigen dünnen Ablaufröhrchen 24, das in den benachbarten Rohrstrang 10 mündet und ebenfalls einen mit einem Ausdehnungselement zusammenwirkenden induktiven Füllgeber 25 aufweist. Sobald der letzte Kondensatrest abgelaufen ist, wird durch einem vom Füllgeber 25 ausgehenden Impuls das Magnetventil 23 wieder geschlossen und zugleich der Vorgang im Summierer 26 zu den vorhergegangenen Entleerungen hinzuaddiert und zugleich in einem Anzeigegerät 27 die bisher gemessene Wärmemenge in Kcal angezeigt.

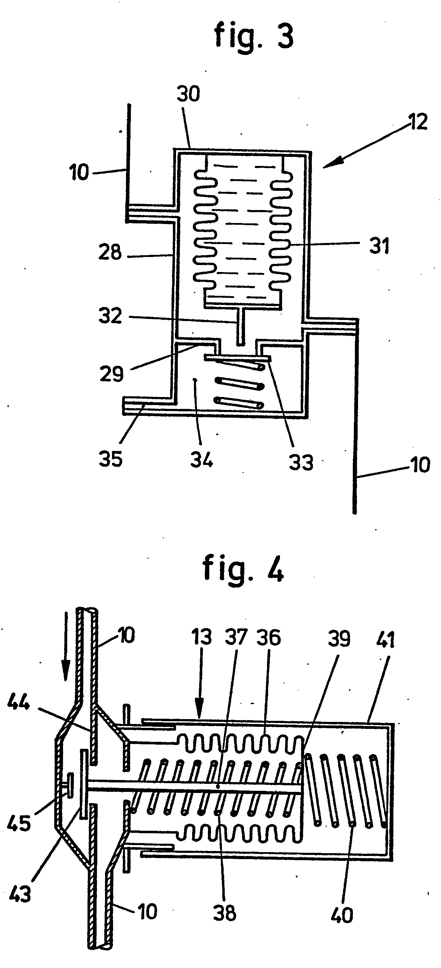

Da die Anlage noch durch ein unabhängiges Organ gesichert werden muß, wird das in dem Rohrstrang 10 für das Kondensat eingebaute Sicherheitsventil 12 nach Fig. 3 besonders ausgebildet. Es wird im wesentlichen von einem allseitig geschlossenen Gehäuse 28 gebildet, der einen Gehäuseboden 29 aufweist. An der Gehäusedecke 30 ist ein mit Ausdehnungsflüssigkeit gefüllter Balg 31 oder eine Membran angeordnet, die an der gegenüberliegenden geschlossenen Seite einen nach unten wirkenden Stift 32 aufweist. Diesem gegenüber ist im Boden 29 ein sich nach unten entgegen der Wirkung einer Feder öffnendes Ventil 33 vorgesehen, durch das der Behälterinhalt bzw. der Inhalt des oberhalb dieses Ventils verlaufenden Rohrstranges 10 in den unteren Teil des Behälters bzw. in einen besonderen Auffangbehälter 34 entleert wird, der eine Auslauf 35 für das Kondensat aufweist.

Zur Gestaltung des Temperaturreglers 13 wird gemäß Fig. 4 der Tatsache Rechnung getragen, daß bei der Übertragung der Wärme durch Dampf der Druck im Übergabekreis 5 von der Kondensationstemperatur abhängig ist, der im vorliegenden Fall zur Temperaturregulierung benutzt wird. Heirzu dient entweder eine Membran oder ein Balg 36, der einen geschlossenen Boden hat und mit seiner offenen Seite an der ortsfesten Begrenzung der Öffnung für den Kondensatzulauf befestigt ist. An der ortsfesten Begrenzung ist zusätzlich noch das eine Ende einer zentrisch im Balg 36 und auf einem Ventilschaft 37 geführten Schraubenfeder 38 abgestützt, deren anderes Ende am Balgboden 39 anliegt, auf dem auch das freie Ende des Ventilschaftes 37 aufsteht. Auf die Außenseite des Balgbodens wirkt eine gegenüber der inneren Schraubenfeder 38 etwas stärkere Schraubenfeder 40 ein, die einstellbar ausgebildet ist und beispielsweise mit ihrem anderen Ende an dem verschraubbaren Boden eines topfförmigen Gehäuses 41 anliegt. Das Gehäuse 41 kann auch selbst verschraubbar an einem Kragen angeordnet sein, der an der ortsfesten Begrenzung der Öffnung für den Kondensatzulauf befestigt ist. Der Ventilschaft trägt an dem dem Rohrstrang 10 zugekehrten Ende einen Ventilteller 43, der beispielsweise eine Öffnung in einer Zwischenwand 44 zwischen zwei geschlossenen und erweitert ausgebildeten Enden zweier nebeneinanderliegender Rohrstrangteile 10 verschließt und dadurch den Kondensatzulauf zum Verdampfer des primärkreisseitigen Wärmeaustauschers 3 unterbricht. Gegenüber dem Ventilteller 43 ist ein ortsfester, den Hub des Ventils um die maximalen Wassermengen begrenzender Anschlag 45 angebracht.

Jede Druckänderung im Übergabekreis verursacht eine Längenänderung des Balges 36. Diese Längenänderung betätigt das Ventil 37,43, welches dadurch geöffnet oder geschlossen wird und die zum Verdampfer des primärseitigen Wärmeaustauschers 3 führende Öffnung verschließt oder öffnet. Mit der Verstellung de äußeren Schraubenfeder 40 wird der äußere Druck erhölt oder vermindert. Beispielsweise hat der Übergabekreis 5 einen Innendruck von 0,1 ata (45,4°C). Die wirksame Fläche des Balges beträgt 1 cm². Die innere Schraubenfeder 38 ist so bemessen, daß das mit dem Balg 36 verbundene Ventil 37, 43 schließt, wenn die Gegenkraft der Schraubenfeder 40 0,2 Kp beträgt. Soll die Temperatur auf 90°C erhöht werden, so wird die Schraubenfeder 40 auf 0,9 Kp vorgespannt. Dadurch öffnet das Ventil 37,43 und das Kondensat fließt solange in die Rohrschlange bzw. Verdampfer des primärkreisseitigen Wärmeaustauschers, bis der Innendruck entsprechend der gewünschten Temperatur von 90°C auf 0,7 ata ansteigt. Ist dieser Druck erreicht, so schließt das Ventil 37,43. Der Temperaturregler 13 ist somit in Abhängigkeit von der jeweiligen Höhe des Anschlages 45 gleichzeitig auch ein Begrenzer der maximalen Wärmeleistung der Vorrichtung. Das ist insofern notwendig, weil die Fernheizwerke einen zulässigen maximalen Wärmeabnahmewert vorschreiben, den kein Verbraucher überschreiten darf. Hierbei muß ein solcher Begrenzer die Temperaturdifferenz zwischen Vorlauf- und Rücklauf sowie die Wassermenge der Vorrichtung erfassen. Durch die Begrenzung des Ventilhubes durch den ortsfesten, gegebenenfalls einstellbar ausgebildeten Anschlag 45 wird in einfacher Weise verhindert, daß die für den maximalen Wärmeabnahmewert notwendige Kondensatdurchflußmenge zum Verdampfer des Wärmeaustauschers 3 überschritten wird. Soll beispielsweise der maximale Wärmeabnahmewert 200 000 Kcal/h betragen, so entspricht dieser Wert etwa der Verdampfungswärme von 377 l/h Wasser. Diese Durchflußmenge wird dann an dem ortsfesten Anschlag 45 des Temperaturreglers 13 eingestellt.

Der Temperaturregler ist nicht nur für Heizungs- und Warmwasserregelung in der Fernheizung sondern auch für Sonnenkollektoren geeignet.

**Patentansprüche**

1. Vorrichtung zum Übertragen von Heizwärme von einem eine Wärmequelle aufweisenden Primärkreis auf jeweils mit einem Reglerventil versehene und Verbraucher durchströmende Sekundärkreise über im Primärkreis in Serie geschaltete Wärmeaustauscher, dadurch gekennzeichnet, daß zwischen dem Primärkreis (1,2) und jedem Sekundärkreis (6) ein die Wärme mittels Dampf übertragender Übergabekreis (5) vorgesehen ist, der primärseitig an den Wärmeaustauscher (3) des Primärkreises (1,2) und sekundärseitig an einen weiteren Wärmeaustauscher angeschlossen und mit einem konstanten, von einem Wärmezähler (11) und einem Temperaturregler (13) gesteuerten Übertragungsmedium teilweise gefüllt und durch ein Sicherheitsventil (12) überwacht ist.

2. Vorrichtung nach Anspruch 1, dadurch gekennzeichnet, daß als Wärmequelle der Wärmezufuhrstrang (2) des Fernheiznetzes vorgesehen ist, durch den die in Serie geschalteten Wärmeaustauscher (3) des Primärkreises ungeregelt mit hochgespannter Fernwärme beaufschlagbar sind.

3. Vorrichtung nach den Ansprüchen 1 und 2, dadurch gekennzeichnet, daß jeder primärkreisseitige Wärmeaustauscher (3) abschaltbar ausgebildet und durch eine absperrbare Umgehungsleitung (14) überbrückt ist.

4. Vorrichtung nach den Ansprüchen 1 bis 3, dadurch gekennzeichnet, daß jeder sekundärkreisseitige Wärmeaustauscher (4) des Übergabekreises (5) als Kondensator ausgebildet ist, in dessen Rohrstrang (10) für den Kondensatablauf in Strömungsrichtung gesehen der Wärmezähler (11), das Sicherheitsventil (12) und der Temperaturregler (13) eingebaut sind.

5. Vorrichtung nach den Ansprüchen 1 bis 4, dadurch gekennzeichnet, daß sowohl im primärkreisseitigen als auch im sekundärkreisseitigen Wärmeaustauscher (3 und 4) jeweils eine Rohrschlange vorgesehen ist, die im Übergabekreis (5) in Serie angeordnet sind, wobei die Rohrschlange im primärkreisseitigen Wärmeaustauscher (3) von außen von der Fernwärme beaufschlagt ist.

6. Vorrichtung nach den Ansprüchen 1 bis 5, dadurch gekennzeichnet, daß der primärkreisseitige und der sekundärkreisseitige Wärmeaustauscher (3,4) einschließlich dem Wärmezähler (11), Sicherheitsventil (12) und Temperaturregler (13) jedes Übergabekreises (5) zu einem Aggregat zusammengeschlossen sind, in welchem der sekundärkreisseitige Wärmeaustauscher (4) bzw. Kondensator mit vorbestimmtem Abstand oberhalb des primärkreisseitigen Wärmeaustauschers (3) angeordnet ist.

7. Vorrichtung nach Anspruch 1, dadurch gekennzeichnet, daß der Wärmezähler von einem Behälter (15) für eine der Meßgröße des Wärmezählers bei einer unteren Temperatur- und Druckgrenze im Übergabekreis (5) entsprechende Flüssigkeitsmenge gebildet ist, daß der Behälter (15) einen sich nach oben erstreckenden Zusatzraum (16) für einen Verdrängerkolben (17) und für die Volumendifferenz des der oberen Temperatur- und Druckgrenze im Übergabekreis (5) unterliegenden Kondensats aufweist und mit einem in den Zusatzraum (16) von oben einmündenden Meßrohr (20) versehen ist, auf dem zum Einstellen der Kondensattemperatur ein mit einem Ausdehnungselement zusammenwirkender induktiver Füllgeber (21) angeordnet ist, dem im Rohrstrang (10) für das Kondensat ein Magnetventil (22) zugeordnet ist, das mit einem unterhalb des Behälters (15) im Rohrstrang (10) vorgesehenen zweiten Magentventil (23) zusammenwirkt, daß im Behälterboden ein mit dessen Innenseite bündiges dünnes und in den Rohrstrang (10) einmündendes Ablaufröhrchen (24) mit einem Ausdehnungselement und einem induktiven Füllgeber (25) angeordnet ist, der mit einem an ein Anzeigegerät (27) angeschlossenen Summierer (26) verbunden ist.

8. Vorrichtung nach Anspruch 7, dadurch gekennzeichnet, daß der Rohrstrang (10) des sekundärseitigen Wärmeaustauschers (4) für das aus dem Wärmezähler (11) abfließende Kondensat im Behälter (15) oberhalb des Behälterbodens endet.

9. Vorrichtung nach den Ansprüchen 7 und 8, dadurch gekennzeichnet, daß das freie Ende der Kolbenstange (18) des Verdrängerkolbens (17) in einem mit Ausdehnungsflüssigkeit gefüllten und sich senkrecht zum Behälterboden erstreckenden Zylinder (19) verschiebbar geführt ist.

10. Vorrichtung nach Anspruch 1, dadurch gekennzeichnet, daß das im Rohrstrang (10) des sekundärseitigen Wärmeaustauschers (4) eingebaute Sicherheitsventil (12) des Übergabekreises (5) von einem allseitig geschlossenen Gehäuse (28) gebildet ist, das innen an der Gehäusedecke (30) einen mit Ausdehnungsflüssigkeit gefüllten Balg (31) mit einem an der gegenüberliegenden Seite angeordneten Stift (32) und im Gehäuseboden (29) ein unter Einwirkung des Stiftes (32) entgegen der Wirkung einer Feder sich nach außen öffnendes Ventil (33) aufweist.

11. Vorrichtung nach Anspruch 10, dadurch gekennzeichnet, daß an das Gehäuse (28) unterhalb des Ventils (33) ein Auffangbehälter (34) mit einem Auslauf (35) angeschlossen ist.

12. Vorrichtung nach Anspruch 1, dadurch gekennzeichnet, daß der Temperaturregler (13) von einem den Kondensatrücklauf in den Verdampfer des primärkreisseitigen Wärmeaustauschers (3) regelnden Ventil (37,43) gebildet ist, das einen auf dem Boden (39) eines Balges (36) aufstehenden, am anderen Ende mit einem Ventilteller (43) versehenen Schaft (37) aufweist, auf welchem eine mit einem Ende innen am Balgboden (39) anliegende Schraubenfeder (38) geführt ist, deren anderes Ende an der am Rohrstrang (10) für das Kondensat ortsfesten Begrenzung der Öffnung für den Kondensatzulauf in dem ebenfalls an dieser Begrenzung befestigten Balg (36) abgestützt ist, und daß auf der Außenseite des Balgbodens (39) das eine Ende einer in Bezug auf ihre Länge einstellbaren Schraubenfeder (40) anliegt, deren anderes Ende am Boden eines topfförmigen, an der ortsfesten Begrenzung angeordneten Gehäuses (41) abgestützt ist.

13. Vorrichtung nach Anspruch 12, dadurch gekennzeichnet, daß gegenüber dem Ventilteller (43) des Temperaturreglers (13) ein ortsfester, den Hub des Ventils (37,43) und damit die maximale Wärmeleistung der Vorrichtung begrenzender Anschlag (45) angeordnet ist.

**Claims**

1. Apparatus for the transfer of heating temperature from a primary circuit including a heat source to a number of secondary circuits each comprising a control valve and communicating with a consumer, via heat exchangers serially connected in said primary circuit, characterized in that between said primary circuit (1,2) and each secondary circuit (6) there is provided a transfer circuit (5) for the transfer of heat by means of steam, said transfer circuit being connected at its primary circuit side to the respective heat exchanger (3) of the primary circuit (1,2), and at its secondary circuit side, to a further heat exchanger, and being partially filled with a constant transfer medium controlled by a heat counter (11) and a temperature regulator (13) and protected by a safety valve (12).

2. Apparatus according to claim 1, characterized in that said heat source comprises the heat supply duct (2) of a remote heating network by way of which the serially connected heat exchangers (3) of the primary circuit may be supplied with high-energy transfer heat in a non-controlled manner.

3. Apparatus according to claims 1 and 2, characterized in that each primary circuit side heat exchanger (3) is adapted to be shut off and is bridged by a bypass duct (14) likewise adapted to be shut off.

4. Apparatus according to claims 1 to 3, characterized in that each secondary circuit side heat exchanger (4) of the transfer circuit (5) is designed as a condenser the condensate return duct (10) of which has sequentially inserted therein, in the flow direction, said heat counter (11), said safety valve (12), and said temperature regulator (13).

5. Apparatus according to claims 1 to 4, characterized in that said primary circuit side heat exchanger (3) and said secondary circuit side heat exchanger (4) each comprise a tube coil (5) serially interconnected within said transfer circuit, the tube coil of said primary circuit side heat exchanger (3) being supplied with said transfer heat at its exterior surface.

6. Apparatus according to claims 1 to 5, characterized in that the primary circuit side heat exchanger (3) and the secondary circuit side heat exchanger (4) of each transfer circuit (5), together with the heat counter (11), the safety valve (12) and the temperature regulator (13) thereof are interconnected to form a closed system in which the secondary circuit side heat exchanger (4) or condenser is located at a predetermined spacing above the primary circuit side heat exchanger (3).

7. Apparatus according to claim 1, characterized in that said heat counter comprises a container (15) for a liquid amount corresponding to the measuring value of the heat counter at a lower temperature and pressure limit within the transfer circuit (5), said container (15) including an upwardly extending auxiliary space (16) for a displacement plunger (17) and for the volume differential of the condensate subjected to the upper temperature and pressure limit within the transfer circuit (5), a measuring tube (20) opening into said auxiliary space (16) from above being provided with an inductive filling detector (21) cooperating with an expansion element for adjusting the condensate temperature and operatively connected to a solenoid valve (22) in said condensate return duct (10) cooperating with a second solenoid valve (23) disposed in said return duct (10) below said container (15), a thin discharge tube (24) opening through the bottom of said container flush with the interior surface thereof and leading into said return duct (10) being provided with an expansion element and an inductive filling detector (25) connected to a summing device (26) itself connected to a display device (27).

8. Apparatus according to claim 7, characterized in that the return duct (10) of the secondary circuit side heat exchanger (4) for the condensate flowing from said heat counter (11) ends within said container (15) above the bottom thereof.

9. Apparatus according to claims 7 and 8, characterized in that the free end of the piston rod (18) of said displacement plunger (17) is slidably guided in a cylinder (19) extending perpendicularly to the container bottom and filled with an expansion fluid.

10. Apparatus according to claim 1, characterized in that the safety valve (12) disposed in the return duct (10) of the secondary circuit side heat exchanger (4) of said transfer circuit (5) comprises a completely closed housing (28) containing a bellows (31) attached to the inside of the housing top cover (30) and filled with an expansion fluid while carrying a pin (32) at its opposite side, the bottom (29) of said housing being provided with a valve (33) adapted to be actuated by said pin to open outwards against the bias of a spring.

11. Apparatus according to claim 10, characterized in that said housing (28) is connected to a spillage container (34) disposed below said valve (33) and provided with a drain (35).

12. Apparatus according to claim 1, characterized in that said temperature regulator (13) comprises a valve (37,43) controlling the condensate return flow to the evaporator of the primary circuit side heat exchanger (3), said valve including a valve shank (37) rising from the bottom (39) of a bellows (36) and carrying a valve disc (43) at its other end, said shank being surrounded by a coiled spring (38) one end of which is engaged with the interior surface of the bottom (39) of said bellows, while its other end engages a stationary portion of said return duct (10) defining an opening for the flow of the condensate into said bellows which is also fixedly attached to said stationary portion, the exterior surface of the bottom (39) of said bellows being engaged by one end of an adjustable-length coiled spring (40), the other end of which engages the bottom of a cup-shaped housing (41) connected to said stationary portion.

13. Apparatus according to claim 12, characterized in that a stationary stop member (45) is located opposite said valve disc (43) of said temperature regulator (13) for limiting the stroke of said valve (37, 43) and thus the maximum heat transfer rate of said apparatus.

## Revendications

1. Dispositif pour le transfert de chaleur à partir d'un circuit primaire comportant une source de chaleur à des circuits secondaires comportant dans chaque cas une soupape de réglage et traversant des récepteurs ou des consommateurs, par l'intermédiaire d'échangeurs de chaleur montés en série dans le circuit primaire, caractérisé en ce que entre le circuit primaire (1, 2) et chaque circuit secondaire (6) on prévoit un circuit de transfert (5) transférant la chaleur au moyen de vapeur qui est raccordé du côté primaire à l'échangeur de chaleur (3) du circuit primaire (1,2) et du côté secondaire à un autre échangeur de chaleur et qui est rempli partiellement par un milieu de transfert constant, commandé par un compteur de chaleur (11) et un thermostat (13) et surveillé par une soupape de sécurité (12).

2. Dispositif suivant la revendication 1, caractérisé en ce qu'on prévoit comme source de chaleur le tronçon de conduite d'amenée de chaleur (2) du réseau de chauffage à distance au moyen duquel les échangeurs de chaleur (3) du circuit primaire disposés en série peuvent être alimentés sans réglage avec de la chaleur transportées à distance par un fluide sous pression élevée.

3. Dispositif suivant les revendications 1 et 2, caractérisé en ce que chaque échangeur de chaleur (3) du côté du circuit primaire est réalisé de manière à pouvoir être mis hors circuit et est court-circuité par une conduite de dérivation (14) pouvant être fermée.

4. Dispositif suivant les revendications 1 à 3, caractérisé en ce que chacun des échangeurs de chaleur (4) du circuit de transfert (5) du côté du circuit secondaire est réalisé sous forme de condenseur dans le tronçon de conduite (10) pour l'écoulement du condensat duquel sont incorporés le compteur de chaleur (11), la soupape de sécurité (12) et le thermostat (13) (lorsqu'on observe dans le sens d'écoulement).

5. Dispositif suivant les revendications 1 à 4, caractérisé en ce qu'on prévoit tant dans l'échangeur de chaleur du côté du circuit primaire que dans celui du côté du circuit secondaire (3 et 4) chaque fois un serpentin, ceux-ci étant disposés en série dans le circuit de transfert (5), le serpentin dans l'échangeur de chaleur (3) du côté du circuit primaire étant alimenté à partir de l'extérieur par la chaleur transportée à distance.

6. Dispositif suivant les revendications 1 à 5, caractérisé en ce que l'échangeur de chaleur du côté du circuit primaire et l'échangeur de chaleur du côté du circuit secondaire (3 et 4) ainsi que le compteur de chaleur (11), la soupape de sécurité (12) et le thermostat (13) un chacun des circuits de transfert (5) sont assemblés en un agrégat dans lequel l'échangeur de chaleur (4) du côté du circuit secondaire où le condenseur est disposé à une distance prédéterminée au-dessus de l'échangeur de chaleur (3) du côté du circuit primaire.

7. Dispositif suivant la revendication 1, caractérisé en ce que le compteur de chaleur est formé par un réservoir (15) pour une quantité de liquide correspondant à la grandeur de mesure du compteur de chaleur pour une limite de température et de pression inférieures dans le circuit de transfert (5), en ce que le réservoir (15) comporte un espace supplémentaire s'étendant vers le haut pour un piston plongeur (17) et pour la différence de volume du condensat soumis aux limites de température et de pression supérieures dans le circuit de transfert (5) et est muni d'un tuyau de mesure (20) débouchant à partir du haut dans l'espace supplémentaire (16), sur lequel est monté un émetteur inductif de remplissage (21) coopérant avec un élément à dilatation, auquel est associé une vanne magnétique (22) dans le tronçon de conduite (10), laquelle coopère avec une deuxième vanne magnétique (23) prévue dans le tronçon de conduite (10) au-dessous du réservoir (15), en ce que dans le fond du réservoir est disposé un petit tube d'écoulement mince (24) débouchant dans le tronçon de conduite (10), affleurant à la face intérieure du fond et qui comporte un élément à dilatation et un émetteur inductif de remplissage (25) qui est relié à un additionneur (26) raccordé à un appareil indicateur (27).

8. Dispositif suivant la revendication 7, caractérisé en ce que le tronçon de conduite (10) de l'échangeur de chaleur (4) du côté secondaire, pour le condensat s'écoulant à partir du compteur de chaleur (11) se termine dans le réservoir (15) au-dessus du fond du réservoir.

9. Dispositif suivant les revendications 7 et 8, caractérisé en ce que l'extrémité libre de la tige (18) du piston plongeur (17) est guidée de mainière coulissable dans un cylindre (19) disposé perpendiculairement au fond du réservoir et rempli d'un liquide à dilatation.

10. Dispositif suivant la revendication 1, caractérisé en ce que la soupape de sécurité (12) du circuit de transfert (5) incorporée dans le tronçon de conduite (10) de l'échangeur de chaleur (40) du côté secondaire est formée par un logement (28) fermé vers tous les côtés qui comporte à l'intérieur, à la partie supérieure (30) du logement, un soufflet (31) rempli d'un liquide à dilatation et ayant à son côté opposé une cheville (32) et une soupape (33) s'ouvrant vers l'extérieur à l'encontre de l'action d'un ressort.

11. Dispositif suivant la revendication 10, caractérisé en ce qu'un récipient récepteur (34) comportant un écoulement (35) est raccordé au logement (28) au-dessous de la soupape (33).

12. Dispositif suivant la revendication 1, caractérisé en ce que le thermostat (13) est formé par une soupape (37, 43) réglant le retour du condensat dans l'évaporateur de l'échangeur de chaleur (3) du côté du circuit primaire, soupape qui comporte un tige (37) qui prend appui sur le fond (39) d'un soufflet (36) et qui comporte à son autre extrémité une tête de soupape (43), un ressort hélicoïdal (38) en contact par l'une de ses extrémités avec l'intérieur du fond du soufflet (39) étant guidé par cette tige, l'autre extrémité de ce ressort prenant appui sur la limitation fixe de l'ouverture pour l'amener du condensat sur le tronçon de conduite (10) pour le condensat dans le soufflet (36) également fixé sur cette limitation et en ce qu'une extrémité d'un ressort hélicoïdal (40) réglable en longueur prend appui sur la face extérieure du fond du soufflet (39), l'autre extrémité de ce ressort prenant appui sur le fond d'un logement (41) en forme de pot, également disposé sur la limitation fixe précitée.

13. Dispositif suivant la revendication 12, caractérisé en ce qu'en face de la tête de soupape (43) du thermostat (13) est disposée une butée fixe (45) limitant la course de la soupape (37, 43) et de ce fait la puissance thermique maximale du dispositif.

# fig. 1

# fig. 2

# fig. 3

# fig. 4